Europäisches Patentamt

European Patent Office

Office européen des brevets

(11) Veröffentlichungsnummer: **0 284 737 B1**

(12) **EUROPÄISCHE PATENTSCHRIFT**

(45) Veröffentlichungstag der Patentschrift: **27.11.91**

(51) Int. Cl.⁵: **G01B 7/03**

(21) Anmeldenummer: **88101739.6**

(22) Anmeldetag: **06.02.88**

(54) Messtaster.

(30) Priorität: **13.03.87 DE 3708105**

(43) Veröffentlichungstag der Anmeldung:
**05.10.88 Patentblatt 88/40**

(45) Bekanntmachung des Hinweises auf die
Patenterteilung:
**27.11.91 Patentblatt 91/48**

(84) Benannte Vertragsstaaten:
**AT CH DE FR GB IT LI**

(56) Entgegenhaltungen:
**CH-A- 660 421**
**DE-A- 3 530 229**
**DE-C- 2 620 100**

(73) Patentinhaber: **ROBERT BOSCH GMBH**
**Postfach 50**
**W-7000 Stuttgart 1(DE)**

(72) Erfinder: **Möllendorf, Manfred, Dr.**
**Hoffmannstrasse 94**
**W-7250 Leonberg(DE)**
Erfinder: **Gölzer, Dr.**
**Gartenstrasse 20**
**W-7141 Schwieberdingen(DE)**

## Beschreibung

### Stand der Technik

Die Erfindung geht aus von einem gattungsgemäßen Meßtaster für Koordinatenmeßmaschinen, Handhabungsgeräte oder dergleichen. Aus der DE-PS 26 20 100 ist eine Meßeinrichtung mit einem in drei Dimensionen beweglichen, in einem Meßschlitten angeordneten Meßtaster bekannt. Der Meßschlitten ist seinerseits in drei Dimensionen bewegbar. Der Meßschlitten mit dem Meßtaster wird relativ zu einem zu vermessenden Werkstück bewegt. Bei einem Meßvorgang wird der Meßschlitten zu dem Werkstück hin bewegt, bis das Tastelement des Meßtasters das Werkstück antastet, wobei in diesem Augenblick die auf eine Bezugsposition bezogene jeweilige tatsächliche Position des Tastelementes erfaßt wird. Der Meßschlitten wird nach dem Kontakt des Tastelementes mit dem Werkstück vorzugsweise automatisch angehalten. Da dieser Vorgang eine gewisse Zeit benötigt, tritt ein mehr oder weniger großes Überschwingen auf. Dieses Überschwingen äußert sich in einer Bewegung des Tastelementes zum Meßschlitten. Der Meßvorgang ist demnach in eine grobe Positionsmessung, die durch die Position des Meßschlittens gegeben ist, und eine feine Positionsmessung mit dem Tastelement des Meßtasters aufgeteilt. Die Positionsmessung des Tastelements erfolgt mit Hilfe von wenigstens zwei induktiven Weggebern, die aufgrund der erforderlichen Genauigkeit als Differentialtransformatoren ausgebildet sind.

### Vorteile der Erfindung

Der erfindungsgemäße Meßtaster für Koordinatenmeßmaschinen, Handhabungsgeräte und dergleichen wie im Anspruch 1 definiert weist demgegenüber den Vorteil auf, daß anstelle mehrerer teurer induktiver Geber eine preisgünstige von einem Permanentmagneten angesteuerte Detektionsvorrichtung mit magnetoresistiven Sensoren vorgesehen ist. Die Detektionsvorrichtung ist in einer vorzugsweise ebenen Fläche leicht realisierbar und eignet sich zur Abgabe von Signalen, aus denen dreidimensional eine Position des mit dem Tastelement verbundenen Permanentmagneten ermittelbar ist.

Die Fläche der Detektionsvorrichtung ist mit beliebigen Abmessungen realisierbar. Eine große Fläche bringt den Vorteil mit sich, daß das Überschwingen des Meßtasters, das dem Meßweg des Tasters entspricht, nach dessen Anstoßen an die zu vermessende Werkstückoberfläche größer als bei der bekannten Meßvorrichtung sein darf. Damit können auch die den Meßschlitten bewegenden Antriebsmotoren kleiner dimensioniert werden, da sie nur ein geringeres Drehmoment aufbringen müssen. Bei der Verwendung von Antriebsmotoren mit demselben Drehmoment ist eine schnellere Meßgeschwindigkeit erzielbar.

Ein weiterer Vorteil des erfindungsgemäßen Meßtasters ist es, daß die Nullage, in die der Meßtaster unter der Zug- oder Druckwirkung von Federn nach einem Auslenkvorgang zurückgestellt wird, nicht präzise justiert werden muß. Ebenso kann eine Änderung der Nullage, z.B. durch Verbiegung der Federn, erkannt und korrigiert werden. Weiterhin spielen Gravitationseinflüsse auf den Meßtaster und eine Langzeitdrift durch Alterung der Sensoren keine Rolle mehr, da sie erkannt und berücksichtigt werden können.

Durch die in den Unteransprüchen aufgeführten Maßnahmen sind vorteilhafte Weiterbildungen und Verbesserungen des im Hauptanspruch angegebenen Meßtasters möglich.

In einem ersten Ausführungsbeispiel der Detektionsvorrichtung sind die Sensoren in einer Fläche derart angeordnet, daß vier Sensoren an den Eckpunkten von wenigstens einem in der Fläche liegenden regelmäßigen Viereck angeordnet sind. In einem zweiten Ausführungsbeispiel sind vier Sensoren im Mittenbereich der Umfangslinien von wenigstens einem in der Fläche liegenden regelmäßigen Viereck angeordnet. In einem dritten Ausführungsbeispiel der Detektionsvorrichtung sind die Sensoren in einer Fläche derart angeordnet, daß parallel zu den beiden Koordinatenrichtungen des der Fläche zugrundeliegenden Koordinatensystems eine Sensorreihe liegt, die mehr als zwei Sensoren aufweist. In einem vierten Ausführungsbeispiel der Detektionsvorrichtung sind mehr als zwei Sensoren auf jeder der vier Umfangslinien wenigstens eines in der Fläche liegenden Vierecks angeordnet.

Die magnetoresistiven Elemente weisen im allgemeinen eine Vormagnetisierung auf, damit ein definiertes Null-Signal hysteresefrei erhalten wird. Vorteilhaft ist es, wenn die Vormagnetisierungfelder der einzelnen Sensoren der Detektionsvorrichtung bestimmte Richtungen aufweisen. Beim ersten und zweiten Ausführungsbeispiel liegen die Richtungen der Vormagnetisierungfelder der auf den Umfangslinien des Vierecks angeordneten magnetoresistiven Sensoren vorteilhafter Weise parallel zur Richtung der Umfangslinien. Im ersten Ausführungsbeispiel, bei dem die Sensoren an den Eckpunkten des Vierecks liegen, ist zusätzlich festgelegt, daß die Richtungen der Vormagnetisierungsfelder bei sich diagonal gegenüberliegenden Sensoren parallel ausgerichtet sind. Beim dritten Ausführungsbeispiel liegen die Richtungen der Vormagnetisierungsfelder der beiden Sensorreihen vorzugsweise senkrecht im Bezug auf die den einzelnen Sensoren zugeordnete Koordinate. Beim vierten Ausführungsbeispiel liegen die Richtungen der Vormagnetisierungsfelder der auf den Umfangslinien der Vierecke angeordneten magnetoresistiven Sensoren vorzugsweise senkrecht zur Richtung der Viereck-Umfangslinien.

Durch die besondere Anordnung der Sensoren und Richtungsfestlegung der Vormagnetisierungsfelder beim dritten und vierten Ausführungsbeispiel der Detektionsvorrichtung wird eine Ummagnetisierung der Magnetschichten vermieden, da sich der Permanentmagnet im dritten Ausführungsbeispiel stets nur auf einer bestimmten Seite aller Sensoren befindet und im vierten Ausführungsbeispiel die Sensoren nur eines Vierecks zur Positionsbestimmung herangezogen werden, über dem sich der Permanentmagnet befindet, womit sich der Permanentmagnet ebenfalls nur auf einer bestimmten Seite aller relevanten Sensoren befindet.

Der berührungslos und somit weitgehend verschleißfrei arbeitende Meßtaster ist in der Lage, die Position des Tastelements bezüglich einer beliebig großen Fläche der Detektionsvorrichtung mit einer Auflösung im Mikrometerbereich und darunter mit einer hohen Arbeitsgeschwindigkeit zu bestimmen. Zusammen mit der höheren Verschiebegeschwindigkeit des Meßschlittens ergibt sich insgesamt ein schnellerer Meßvorgang.

Wenigstens ein der Detektionsvorrichtung zugeordneter Temperatursensor sichert eine hohe Meßgenauigkeit des erfindungsgemäßen Meßtasters bei sich ändernden Betriebstemperaturen.

Die Detektionsvorrichtung läßt sich als einziges Bauteil in Dünnschichttechnologie preisgünstig herstellen. Eine Integration der Auswerteschaltung für die von den Sensoren abgegebenen Signale auf dem Dünnschichtbauteil ist ebenfalls vorgesehen.

Ein Aufbau in Form einzelner Chips, die auf einem Substrathalter geklebt und durch Bonddrähte mit den auf dem Halter befindlichen Lei terbahnen verbunden werden (sowohl Sensoren als auch die Auswerteschaltung), oder in Flipchipbauweise aufgebracht werden, ist ebenfalls vorgesehen.

Weitere Einzelheiten und vorteilhafte Weiterbildungen des erfindungsgemäßen Meßtasters ergeben sich aus weiteren Unteransprüchen in Verbindung mit der folgenden Beschreibung.

Zeichnung

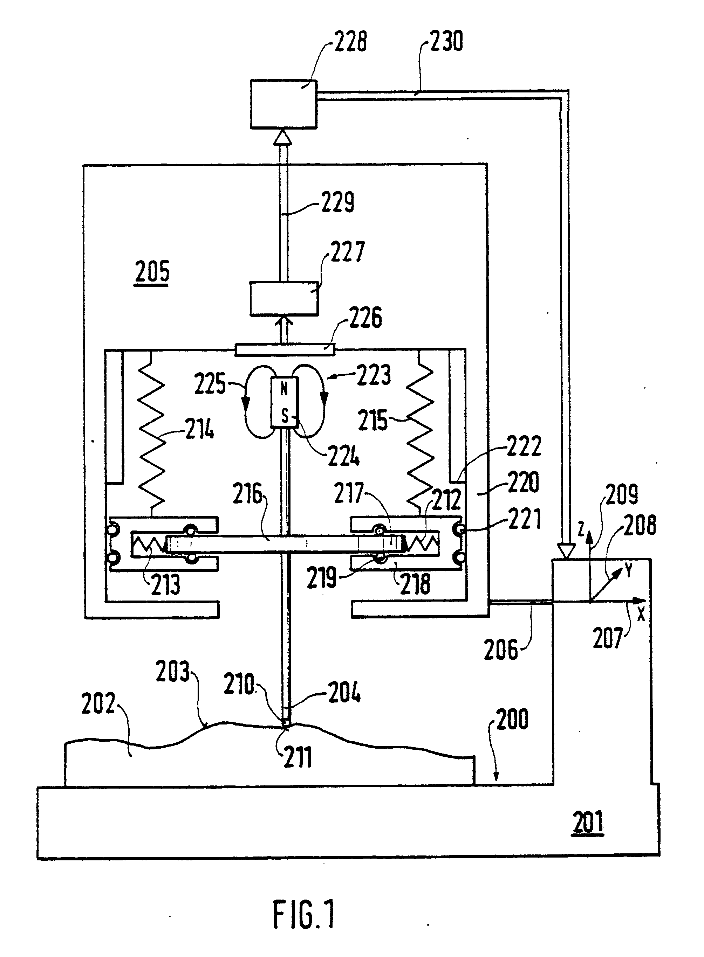

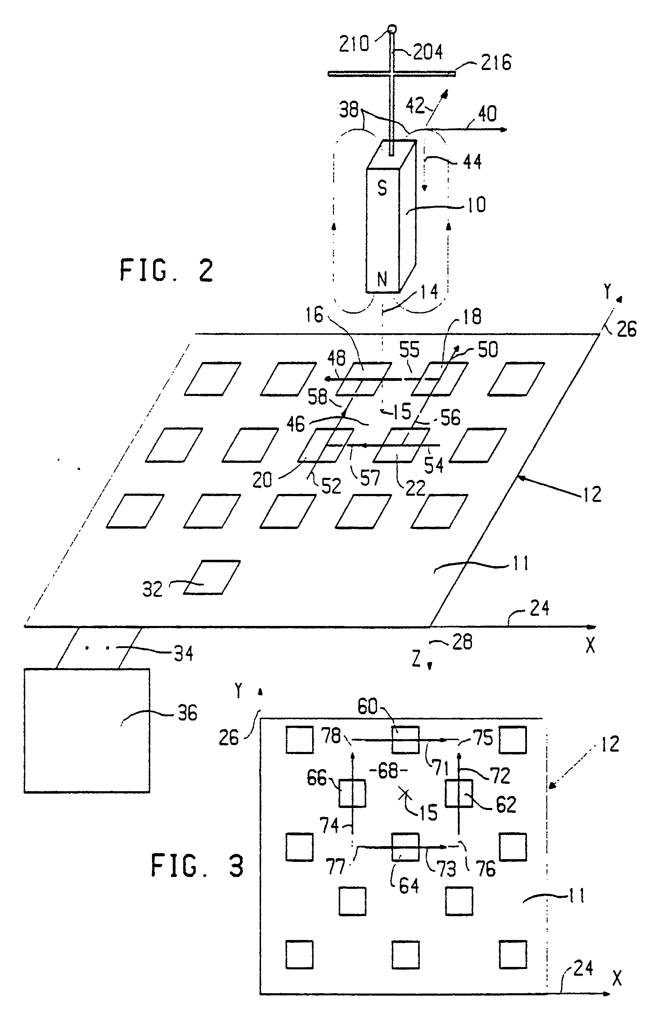

Figur 1 zeigt einen erfindungsgemäßen Meßtaster für Koordinatenmeßmaschinen, Handhabungsgeräte oder dergleichen und die Figuren 2 bis 5 zeigen vier Ausführungsbeispiele einer erfindungsgemäßen Positionsmeßvorrichtung als Teil des Meßtasters gemäß Figur 1.

Beschreibung der Ausführungsbeispiele

Figur 1 zeigt ein auf einem Meßtisch 200 einer Koordinatenmeßmaschine 201 liegendes, zu vermessendes Werkstück 202. Die Oberfläche 203 des Werkstücks 202 wird von einem Tastelement 204 eines Meßtasters 205 abgetastet. Der als Meßschlitten ausgebildete Meßtaster 205 ist mit einer Mechanik 206 mit der Koordinatenmeßmaschine 201 verbunden. Die Mechanik 206 gestattet es, den Meßtaster 205 in drei Raumrichtungen zu bewegen. Der Raum wird aufgespannt durch ein X-, Y-, Z-Koordinatensystem 207, 208, 209, wobei die Ebene des Meßtisches 200 in der X-Y-Ebene 207, 208 des Koordinatensystems liegt. Der Vortrieb des Meßtasters 205 erfolgt vorzugsweise mit drei Schrittmotoren, da bei diesem Motortyp die Position des Meßtasters 205 aus der Motoransteuerung jederzeit ermittelbar ist. Die Position des Meßtasters 205 muß bei jedem Meßvorgang bekannt sein, da sie einen ersten Teil der Koordinatenmessung darstellt. In diesem ersten Schritt wird über die Mechanik 206 der Meßtaster 205 solange verschoben, bis das kugelförmige Tasterende 210 des Tastelements 204 eine Stelle 211 der Oberfläche 203 des zu vermessenden Werkstücks 202 berührt. Durch die Berührung wird das Tastelement 204 aus seiner Nullstellung herausbewegt. Das Tastelement 204 ist von Federn 212 bis 215 in die Nullstellung vorgespannt. Die Nullstellung ist diejenige Stellung, welche der Mittelpunkt des kugelförmigen Endes 210 des Tastelements 204 unter dem alleinigen Einfluß der Federn 212 bis 215 und der Schwerkraft einnimmt, d.h., wenn keine äußere Kraft an dem Ende 210 angreift. Das Tastelement 204 ist bezüglich des Meßtasters 205 in alle drei Koordinatenrichtungen 207 bis 209 bewegbar. Es weist eine scheibenartige Verdickung 216 auf, die in ihrem Randbereich 217 in einem in Z-Richtung 209 beweglichen Teil 218 mit einem Kugellager 219 gelagert ist. Gelagert sind beide Oberflächen der Verdickung 216, so daß sowohl bei einer Zug- als auch einer Druckbelastung in Z-Richtung 209 des Tastelements 204 die Bewegung in X-und Y-Richtung 207, 208 des Tastelements 204 möglichst reibungsarm erfolgt. Bei feststehendem Meßtaster 205 erfolgt eine Bewegung in X- bzw. Y-Richtung 207, 208 des Tastelements 204 gegen die Federkraft der beiden Federn 212, 213, die in dem in Z-Richtung beweglichen Teil 218 angeordnet sind. Eine Kraft in Z-Richtung 209, die auf das Tastelement 204 wirkt, führt zu einer Auslenkung des Tastelementes 204 und des in Z-Richtung beweglichen Teils 218, das zu diesem Zweck in einem Rahmenteil 220 des Meßtasters 205 in Z-Richtung 209 mit einem Kugellager 221 beweglich gelagert ist. Das in Z-Richtung bewegliche Teil 218 ist an den Federn 214, 215 aufgehängt und gegen die Wirkung der Schwerkraft auslenkbar. Die Auslenkungsgrenze ist durch einen Anschlag 222 festlegbar. Das Teil 218, der Rahmen 220 und der Anschlag 222 sind vorzugsweise rotationssymmetrische Körper.

Nach einer Berührung des kugelförmigen Tasterendes 210 und der Werkstückoberfläche 203, 211 findet eine Auslenkung im allgemeinen in drei Dimensionen statt. Diese Auslenkung wird von einer Positionsmeßvorrichtung 223 erfaßt. Sie umfaßt einen Permanentmagneten 224, der mit dem Tastelement 204 bzw. der Verdickung 216 verbunden ist. Das Magnetfeld 225 des Magneten 224 wird von magnetoresistiven Sensoren detektiert, die in einer Detektionsvorrichtung 226 angeordnet sind. Die Signale der Detektionsvorrichtung werden in einer signalverarbeitenden Anordnung 227 erfaßt und weiterverarbeitet. Die Anordnung 227 ist beispielsweise im Meßtaster 205 angeordnet, vorzugsweise ist sie ein Teil der Detektionsvorrichtung 226. Die signalverarbeitende Anordnung 227 gibt ihre Ausgangssignale an eine Zentraleinheit 228 der Koordinantenmeßmaschine 201 ab. Die Zentraleinheit 228 erhält nicht nur über die Leitungen 229 die Signale der signalverarbeitenden Anordnung 227, sondern sie erzeugt auch die Steuersignale für die Antriebsmotoren der Mechanik 206, die ihre Signale über die Leitungen 230 erhalten. Mit der Berechnung der Signale für die Antriebsmotoren ist auch die Position des Meßtasters 205 in der Zentraleinheit 228 bekannt. Zusammen mit der erfaßten Position des Tastelements 204 ist die genaue Position des angemessenen Oberflächenpunkts 211 des Werstücks 202 ermittelbar. Sie kann in einer Anzeige an der Zentraleinheit 228 angezeigt oder für weitere Berechnungen weiterverarbeitet werden.

Figur 2 zeigt im Detail ein erstes Ausführungsbeispiel der Positionsmeßvorrichtung 223. Das Tastelement 204 ist mit einem Permanentmagneten 10 verbunden, der zu einer Detektionsvorrichtung 12 einen bestimmten Abstand 14 aufweist. Der Abstand 14 ist das im Punkt 15 errichtete Lot auf einer Fläche 11. Die Detektionsvorrichtung 12 wird gebildet von magnetoresistiven Elementen 16, 18, 20, 22, die in der Fläche 11 mit einer bestimmten geometrischen Ausrichtung zueinander angeordnet sind. Die Fläche ist festgelegt durch ein X-Y-Koordinatensystem 24, 26. Zur räumlichen Positionsbestimmung des Magneten 10 ist neben der X- und Y-Koordinate 24, 26 eine Z-Koordinate 28 erforderlich. Dieses X-Y-Z-Koordinatensystem 24, 26, 28 kann mit dem Koordinatensystem 207, 208, 209 aus Figur 1 übereinstimmen, muß es aber nicht. Dem Abstand 14 des Magneten 10, den ein Magnetfeld 38 mit einer X-, Y- und Z-Komponente 40, 42, 44 umgibt, von der Fläche 11 entspricht dann ein bestimmter Wert in Z-Richtung 28. Die Detektionsvorrichtung 12 weist weiterhin einen Temperatursensor 32 auf. Die elektrischen Anschlüsse aller Sensoren 16, 18, 20, 22, 32 sind zugunsten einer übersichtlicheren Darstellung in der Detektionsvorrichtung 12 nicht eingezeichnet. Mit dem Bezugzeichen 34 sind die Verbindungsleitung zwischen einer signalverarbeitenden Anordnung 36 und aller Sensoren der Detektionsvorrichtung 12 versehen. Die signalverarbeitende Anordnung 36 kann auf der Fläche 11 oder deren Rückseite untergebracht sein. Die signalverarbeitende Anordnung 36, die der Anordnung 227 aus Figur 1 entspricht, kann auch, wie dort beschrieben, an einer anderen Stelle, beispielsweise im Meßtaster 205 oder auch in der Zentraleinheit 228 der Koordinatenmeßmaschine 201 untergebracht sein.

Die vier Sensoren 16, 18, 20, 22 liegen an den Eckpunkten eines in der Fläche 11 liegenden Vierecks 46. Das Viereck 46 ist beispielsweise ein Rechteck oder, als bevorzugte Ausführungsform, ein Quadrat. Die quadratische Anordnung ergibt einen regelmäßigen Aufbau der gesamten Detektionsvorrichtung 12 und ermöglicht eine einfache Auswertung der Meßsignale. In der Detektionsvorrichtung 12 ist wenigstens ein solches Viereck 46 vorgesehen. Prinzipiell st die Detektionsfläche 11 durch Hinzunahme weiterer Sensoren, die ebenfalls auf den Eckpunkten weiterer Vierecke angeordnet sind, beliebig vergrößerbar. Der Abstand zwischen benachbarten Sensoren ist in bestimmten Grenzen variierbar. Eine untere Abstandsgrenze ist gegeben durch die physikalische Ausdehnung der einzelnen Sensoren, die beispielsweise bei Dünnschichtelementen derzeit im Mikrometerbereich liegt. Eine obere Grenze des Abstands zwischen zwei Sensoren ist gegeben durch die Meßempfindlichkeit der Sensoren bezüglich des Magnetfeldes 38 des Magneten 10 und des maximal zulässigen Meßfehlers, da eine Position des Magneten 10 zwischen zwei Sensoren mit einem Rechenverfahren in der signalverarbeitenden Anordnung 36 angenähert wird. Mit einem Abstand zwischen zwei Sensoren im Millimeterbereich läßt sich eine Auflösung im Mikrometerbereich erreichen.

Ein Betrieb der magnetoresistiven Elemente 16, 18, 20, 22 ohne Vormagnetisierung ist unzweckmäßig. Der elektrische Nullpunkt ohne Magnetfeld 38) ist nicht exakt reproduzierbar, da Hystereseeffekte auftreten; auch sind die Widerstandsänderungen durch das Magnetfeld 38, auf denen der Meßeffekt beruht, nicht optimal. Diese Nachteile werden behoben, wenn man eine magnetische Vorzugsrichtung im magnetischen Sensormaterial erzeugt. Dieser Ausrichtungsvorgang kann bereits Bestandteil des Fertigungsprozesses sein. Eine andere Möglichkeit zur Erzeugung des Vormagnetisierungsfeldes besteht in der Anbringung kleiner Permanentmagnete, beispielsweise unter der Detektionsvorrichtung 12. Ferner kann auch schon ein zur Erfassung der Widerstandsänderung erforderlicher Meßstrom in den Sensoren 16, 18, 20, 22 zur Erzeugung des Vormagnetisierungsfeldes ausreichen. Die Richtungen der Vormagnetisierungsfelder 48, 50, 52, 54 der vier Sensoren 16, 18, 20, 22 sind in Figur 2 eingezeichnet. Sie sind parallel zu den Richtungen der Umfangslinien 55, 56, 57, 58. Die Richtungen der Vormagnetisierungsfelder von sich diagonal gegenüberliegenden Sensoren 16, 22 und 18, 20 sind zueinander parallel.

Die beiden Sensoren 16 und 22 detektieren die Y-Komponente 42 und die Sensoren 18, 20 die X-Komponente 40 des vom Magneten 10 ausgehenden Magnetfeldes 38. Vorteilhaft ist es, wenn die X- und Y-Komponente 40, 42 des Magnetfeldes 38 bei jeder Position des Permanentmagneten 10 bezüglich der Detektionsvorrichtung 12 nicht zu einer Umdrehung der Richtung der Vormagnetisierungsfelder 48, 50, 52, 54 der Sensoren 16, 18, 20, 22 führt. Eine Ummagnetisierung hätte eine Hysterese in der Kennlinie der Sensoren zur Folge, die jedoch, allerdings unter Zeitaufwand, in der signalverarbeitenden Anordnung 36 berücksichtigt werden kann. Eine Positionsbestimmung des als Positionsindikator verwendeten Magneten 10 bezüglich der Detektionsvorrichtung 12 erfolgt in der signalverarbeitenden Anordnung 36 nach dem bekannten Schwerpunktberechnungsverfahren. Sind mehrere Vierecke 46 vorhanden, so kann es für eine grobe Positionsbestimmung zunächst erforderlich sein, nicht nur die zu einem Viereck 46 ehörenden vier Sensoren zur Positionsbestimmung heranzuziehen, sondern ein größeres Suchnetz vorzugeben. Ein Übergang zu einer genauen Positionsmessung ist mit einer Intervallschachtelung möglich.

Eine Bestimmung des Abstandes 14 zwischen dem Magneten 10 und der Detektionsvorrichtung 12, und damit die Bestimmung der Z-Auslenkung 28 des Tastelements 204, ist beispielsweise durch eine Absolutwertauswertung der von den Sensoren 16, 18, 20, 22 abgegebenen Signale möglich. Da der magnetoresistive Effekt temperaturabhängig ist, erhöht ein der Detektionsvorrichtung 12 zugeordneter Temperatursensor 32 die Meßgenauigkeit. Der Temperatursensor 32 muß einen guten Wärmekontakt zu den Sensoren der Detektionsvorrichtung 12 aufweisen. Bei großflächigen Detektionvorrichtungen 12 kann es zweckmäßig sein, mehrere Temperatursensoren 32 vorzusehen.

In Figur 3 ist ein zweites Ausführungsbeispiel der Detektionsvorrichtung 12 gezeigt, bei dem jeweils vier Sensoren 60, 62, 64, 66 im Mittenbereich der Umfangslinien von wenigstens einem in der Detektionsfläche 11 liegenden Viereck 68 angeordnet sind. Das eine Viereck 68 ist durch weitere Vierecke erweiterbar. Den Sensoren 60, 62, 64, 66 liegt ebenfalls der magnetoresistive Effekt zugrunde. Besonders vorteilhaft ist es auch hier, wenn die Richtungen der Vormagnetisierungsfelder 71, 72, 73, 74 der Sensoren 60, 62, 64, 66 parallel zu den Richtungen der Umfangslinien 75, 76, 77, 78 des Vierecks 68 liegen.

Ebenso wie im ersten Ausführungsbeispiel gemäß Figur 2 können auch im zweiten Ausführungsbeispiel gemäß Figur 3 ein oder mehrere Temperatursensoren 32 in der Fläche 11 vorgesehen sein.

Der Vorteil der Detektionsvorrichtung gemäß Figur 3, bei der die Sensoren im Mittenbereich der Umfangslinien liegen, gegenüber der Anordnung gemäß Figur 2, bei der die Sensoren an den Ecken eines Vierecks liegen, liegt darin, daß ein geringerer Seitenversatz des Magnetfeldes 38 bezüglich der Sensoren auftritt. Der Seitenversatz entsteht folgendermaßen: Der Sensor 60 detektiert beispielsweise die Y-Komponente 42 des Magnetfelds 38 des über dem Punkt 15 stehenden Magneten 10. Verschiebt sich der Punkt 15 bei festgehaltenem Y-Wert in X-Richtung 24 im Viereck 68, so durchläuft das Ausgangssignal des Sensors 60, der die Y-Komponente 42 des Magnetfelds 38 detektiert, ein Maximum, ausgehend von und endend mit einem bestimmten Wert. Die Differenz zwischen dem Maximalwert und dem bestimmten Wert ist in der Anordnung gemäß Figur 3 geringer als in der Anordnung gemäß Figur 2, da der Versatz des Punktes 15 bezüglich eines der Sensoren 60, 62, 64, 66 maximal die Hälfte der Ausdehnungen des Vierecks 68 in X-Richtung 24 bzw. Y-Richtung 26, in Figur 2 dagegen die gesamte Ausdehnung des Vierecks 46 in X-Richtung 24 bzw. Y-Richtung 26 betragen kann.

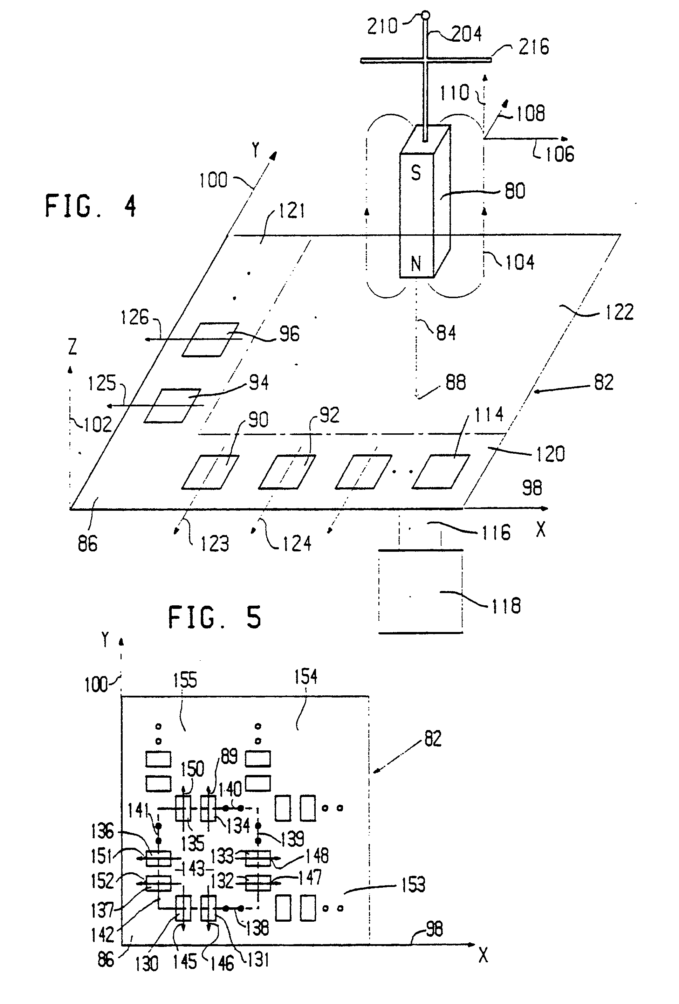

Figur 4 zeigt ein drittes Ausführungsbeispiel der Positionsmeßvorrichtung 223. Sie zeigt einen mit dem Tastelement 204 verbundenen Permanentmagneten 80, der zu einer Detektionsvorrichtung 82 einen mit dem Tastelement 204 verbundenen bestimmten Abstand 84 aufweist.

Der Abstand 84 ist das in Punkt 88 errichtete Lot auf einer Fläche 86. Die Detektionsvorrichtung 82 wird wieder gebildet von magnetoresistiven Elementen 90, 92, 94, 96, die in der Fläche 86 mit einer bestimmten geometrischen Ausrichtung zueinander angeordnet sind. Die Fläche 86 ist festgelegt durch ein X-Y-Koordinatensystem 98, 100. Zur eindeutigen dreidimensionalen Positionsbestimmung 80 ist neben der X- und Y-Koordinate 98, 100 eine Z-Koordinate 102 erforderlich. Auch dieses Koordinatensystem 98, 100, 102 muß nicht notwendiger Weise mit dem Koordinatensystem 207, 208, 209 gemäß Figur 1 übereinstimmen. Ebenso ist das Koordinatensystem nach Figur 4 nicht auf ein kartesisches Koordinatensystem eingeschränkt. Dem Abstand 84 des Magneten 80, den ein Magnetfeld 104 mit einer X-Y- und Z-Komponente 106, 108, 110 umgibt, von der Fläche 86 entspricht dann ein bestimmter Wert auf der Z-Koordinate 102. Die Detektionsvorrichtung 82 weist weiterhin einen Temperatursensor 114 auf. Die elektrischen Anschlüsse aller Sensoren 90, 92, 94, 96, 114 sind zugunsten einer übersichtlicheren Darstellung in der Detektionsvorrichtung 82 nicht eingezeichnet. Mit dem Bezugszeichen 116 sind die Verbindungsleitungen zwischen einer signalverarbeitenden Anordnung 118 und allen Sensoren der Detektionsvorrichtung 82 versehen. Die signalverarbeitende Anordnung 118 kann auf der Fläche 86 oder deren Rückseite untergebracht sein. Ebenso wie im ersten Ausführungsbeispiel gemäß Figur 2 ist es auch möglich, die signalverarbeitende Anordnung 118, die der Anordnung 227 in Figur 1 entspricht, im Meßtaster 205 oder der Zentraleinheit 228 in Figur 1 unterzubringen.

Auf der Detektionsfläche 86 ist eine erste Sensorreihe 120 und eine zweite Sensorreihe 121 vorgesehen, die wenigstens jeweils zwei Sensoren 90, 92 bzw. 94, 96 aufweisen. Die erste Sensorreihe 120 ist parallel zur X-Koordinate 98 und die zweite Sensorreihe 121 ist parallel zur Y-Koordinate 100 des die Fläche definierenden X-Y-Koordinatensystems 98, 100, dessen X-Koordinate 98 und Y-Koordinate 100 einen beliebigen Winkel miteinander bilden. Die beiden Sensorreihen 120, 121 sind derart angeordnet, daß sie eine sensorfreie Fläche 122 begrenzen, oberhalb derer sich der Magnet 80 befindet. Prinzipiell ist die Detektionsfläche durch Hinzunahme weiterer Sensoren und der Verwendung mehrerer Permanentmagnete beliebig vergrößbar. Auch der Abstand zwischen benachbarten Sensoren ist in bestimmten Grenzen variierbar. Eine untere Abstandsgrenze ist gegeben durch die physikalische Ausdehnung der einzelnen Sensoren, die, wie bereits beschrieben, bei Dünnschichtelementen derzeit im Mikrometerbereich liegt. Eine obere Grenze des Abstandes zwischen zwei Sensoren ist gegeben durch die Meßempfindlichkeit der Sensoren bezüglich des Magnetfeldes 98 des Magneten 80 und des maximal zulässigen Meßfehlers, da auch in diesem Ausführungsbeispiel eine Position des Magneten 80 zwischen zwei Sensoren mit einem Rechenverfahren in der signalverarbeitenden Anordnung 118 angenähert wird. Mit einem Abstand zwischen zwei Sensoren im Millimeterbereich läßt sich derzeit noch eine Auflösung im Mikrometerbereich erreichen.

Auch in diesem Ausführungsbeispiel werden die magnetoresistiven Sensoren 90, 92, 94, 96 zweckmäßigerweise mit einer Vormagnetisierung betrieben. Die Richtungen der Vormagnetisierungsfelder 123, 124 der Sensoren 90, 92 der ersten zur X-Richtung 98 parallelen Sensorreihe 120 liegen vorzugsweise senkrecht zur X-Koordinate 98 und die Richtungen der Vormagnetisierungsfelder 125, 126 der Sensoren 94, 96 der zweiten, zur Y-Richtung 100 parallelen Sensorreihe 121 liegen vorzugsweise senkrecht zur Y-Koordinate 100.

Die Orientierung der Vormagnetisierungsfelder 123 bis 126 kann auf zwei Arten erfolgen. Eine erste Möglichkeit besteht darin, die Orientierung so zu wählen, daß das Magnetfeld 104 des Permanentmagneten 80 in jeder möglichen Magnetposition über der freien Fläche 122 die Vormagnetisierungsfelder 123 bis 126 verstärkt. Eine zweite Möglichkeit besteht in der entgegengesetzten Orientierung, die zu einer Abschwächung der Felder 123 bis 126 führt. Wesentlich ist es, daß das Magnetfeld 104 des Magneten 80 keinesfalls ein Umkippen der Vormagnetisierungsfelder 123 bis 126 bewirken kann. Dies ist auch bei der zweiten Möglichkeit der Feldorientierung gewährleistet, wenn die maximal auftretenden Magnetfeldkomponenten 106, 108, 110 und die Stärke der Vormagnetisierungsfelder 123 bis 126 unter Berücksichtigung der geometrischen Gegebenheiten aufeinander abgestimmt sind. Mit der Verhinderung der Umdrehung werden Hystereseeffekte in den Sensoren 90, 92, 94, 96 vermieden. Die Auswertezeit des Meßergebnisses in der signalverarbeiteten Anordnung 118 erfolgt schneller, da die Hysterese nicht berücksichtigt werden muß.

In einem vierten Ausführungsbeispiel der Positionsmeßvorrichtung 82 gemäß Figur 5 sind mehr als zwei Sensoren 130, 131 bzw. 132, 133 bzw. 134, 135 bzw. 136, 137 auf jeder der strichliniert gezeichneten Umfangslinien 138, 139, 140, 141 wenigstens eines in der Fläche 146 liegenden Vierecks angeordnet. Die Vierecke können als Rechtecke, insbesondere Quadrate ausgebildet sein. Die Sensoren 130 bis 137, die magnetoresistive Elemente sind, begrenzen eine sensorfreie Fläche 143. Die beiden Umfangslinien 138, 140 des Vierecks 142 liegen vorzugsweise parallel zur X-Koordinate 98 und die beiden Umfangslinien 139, 140 liegen vorzugsweise parallel zur Y-Koordinate 100 des der Fläche 86 zugrundeliegenden X-Y-Koordinatensystems, das nicht auf ein kartesisches Koordinatensystem eingeschränkt ist. Die Richtungen der Vormagnetisierungsfelder 147, 148, 151, 152 der Sensoren 132, 133, 136, 137 auf den beiden Umfangslinien 139, 141 des Vierecks 142 liegen vorzugsweise parallel zur X-Koordinate 98 und die Richtungen der Vormagnetisierungsfelder 145, 146, 149, 150 der Sensoren 130, 131, 134, 135 liegen vorzugsweise parallel zur Y-Koordinate 100.

Die Detektionsvorrichtung 142 gemäß Figur 5 stellt eine Erweiterung der Anordnung gemäß Figur 3 zur Abdeckung einer größeren Fläche dar. Eine Richtungsänderung der Vormagnetisierungsfelder 145 bis 152 kann hier lediglich bei dem Übergang des über der Detektionsvorrichtung 142 befindlichen, hier nicht gezeigten Magneten, von einer Position, beispielsweise über der freien Fläche 143 des Vierecks 142 in eine Position über der Fläche eines benachbarten Viereckes 153, 154, 155 auftreten. Diese Übergänge werden jedoch in der signalverarbeitenden Anordnung 118 leicht erkannt und können entsprechend berücksichtigt werden. Bei den Ausführungsbeispielen gemäß den Figuren 4 oder 5 ermöglicht der Temperatursensor 114 eine temperaturunabhängige Abstandsbestimmung zwischen dem Magneten 80 und der Detektionsfläche 86, die gleich der Bestimmung der Z-Auslenkung des Tastelements 204 ist. In Figur 5 ist der Temperatursensor aus Übersichtlichkeitsgründen nicht eingezeichnet.

Die allen Ausführungsbeispielen der Positionsmeßvorrichtung 223 zugrundeliegenden Koordinatensysteme spannen mit zwei Koordinatenrichtungen jeweils eine ebene Fläche 11, 86 auf. In besonderen Ausführungsformen können die Flächen auch gekrümmt sein. Damit ergeben sich Vorteile bei der Signalauswertung, wenn das Tastelement eines nicht gezeigten Meßtasters beispielsweise eine Kippbewegung um einen festen Drehpunkt herum ausführt.

In weiteren Ausführungsformen der erfindungsgemäßen Positionsmeßvorrichtung 223 kann anstelle des Permanentmagneten 10, 80 ein Elektromagnet verwendet werden.

Die Detektionsvorrichtung 12, 82 wird vorteilhafter Weise als ein einziges Bauelement in Dünnschichttechnologie hergestellt. Der Temperatursensor 32, 114 kann ebenfalls in Dünnschichttechnologie hergestellt werden, ebenso wie die signalverarbeitende Anordnung 227, 36, 118. Bei größeren Flächen ist ein hybrider Aufbau vorzuziehen, bei dem die Sensoren in Dünnschicht- und die anderen elektronischen Teile in Dickschichttechnik und/oder als oberflächenmontierbare Bauelemente realisiert sind. Bei kleinen Anordnungen ist die Herstellung als einziges Bauelement in Dünnschichttechnik sinnvoll. Bei größeren Flächen wird man einen hybriden Aufbau vorziehen.

## Patentansprüche

1. Meßtaster für Koordinatenmeßmaschinen, Handhabungsgeräte oder dergleichen mit folgenden Merkmalen:
   - das Tastelement (204) des Meßtasters (205) ist in einem Rahmen (220) dreidimensional verschiebbar angeordnet,
   - das Tastelement (204) wirkt mit wenigstens einer Positionsmeßvorrichtung (223) zusammen, die die Position des Tastelements (204) relativ zum Rahmen (220) berührungslos erfaßt,
   - die Positionsmeßvorrichtung (223) enthält wenigstens einen Permanentmagneten (224, 10, 80),
   - dem Permanentmagneten (224, 10, 80) ist eine Detektionsvorrichtung (226, 12, 82) zugeordnet,
   - die Detektionsvorrichtung (226, 12, 82) enthält wenigstens vier in einer durch ein X-Y-Koordinatensystem (24, 26, 98, 100) festgelegten Fläche (11, 86) in X- und Y-Richtung angeordnete magnetoresistive Sensoren (16, 18, 20, 22 bzw. 60, 62, 64, 66 bzw. 90, 92, 94, 96 bzw. 130 bis 137),
   - die Sensoren (16, 18, 20, 22 bzw. 60, 62, 64, 66 bzw. 90, 92, 94, 96 bzw. 130 bis 137) geben an eine signalverarbeitende Signalanordnung (227, 36, 118) Signale ab.

2. Meßtaster nach Anspruch 1, dadurch gekennzeichnet, daß der Detektionsvorrichtung (226, 12, 82) wenigstens ein Temperatursensor (32, 114) zugeordnet ist.

3. Meßtaster nach Anspruch 1 oder 2, dadurch gekennzeichnet, daß jeweils vier Sensoren (16, 18, 20, 22) an den Eckpunkten von wenigstens einem, vorzugsweise vier oder mehr in der Fläche (11) liegenden Vierecken (46) angeordnet sind.

4. Meßtaster nach Anspruch 1 oder 2, dadurch gekennzeichnet, daß jeweils vier Sensoren (60, 62, 64, 66) im Mittenbereich der Umfangslinien (78 bis 81) von wenigstens einem, vorzugsweise vier oder mehr in der Fläche (11) liegenden Vierecken (68) angeordnet sind.

5. Meßtaster nach einem der vorhergehenden Ansprüche 3 oder 4, dadurch gekennzeichnet, daß die Richtung der Vormagnetisierungsfelder (48, 50, 52, 54, 71 bis 74) der der magnetoresistiven Sensoren (16, 18, 20, 22, 60, 62, 64, 66) parallel zu den Richtungen der Umfangslinien (55 bis 58, 75 bis 78) der Vierecke (46, 68) ist.

6. Meßtaster nach Anspruch 1 oder 2, dadurch gekennzeichnet, daß wenigstens zwei Sensoren (130 bis 137) auf jeder der vier Umfangslinien (138 bis 141) wenigstens eines in der Fläche (86) liegenden Vierecks (143, 153, 154, 155) angeordnet sind.

7. Meßtaster nach Anspruch 6, dadurch gekennzeichnet, daß die Richtungen der Vormagnetisierungsfelder (145 bis 152) der auf den Umfangslinien (138 bis 141) der Vierecke (142, 153, 154, 155) angeordneten magnetoresistiven Sensoren (130 bis 137) mit den Umfangslinien (138 bis 141) einen Winkel von etwa 90° bilden.

8. Meßtaster nach einem der Ansprüche 3 bis 7, dadurch gekennzeichnet, daß die Vierecke (46, 68, 143, 153, 154, 155) als Quadrate ausgebildet sind.

9. Meßtaster nach Anspruch 1 oder 2, dadurch gekennzeichnet, daß parallel zu den beiden X-Y-Koordinatenrichtungen (98, 100) des die Fläche (86) definierenden Koordinatensystems wenigstens eine Sensorreihe (120, 121) liegt, die wenigstens drei Sensoren (90, 92, 94, 96) enthält.

10. Meßtaster nach Anspruch 9, dadurch gekennzeichnet, daß die Richtungen der Vormagnetisierungsfelder (123, 124) der Sensoren (90, 92) der zur X-Koordinatenrichtung (98) parallel liegenden ersten Sensorreihe (120) mit der X-Koordinatenrichtung (98) einen Winkel von etwa 90° bilden und daß die Richtungen der Vormagnetisierungsfelder (125, 126) der Sensoren (94, 96) der zur Y-Koordinatenrichtung (100) parallel liegenden zweiten Sensorreihe (121) mit der Y-Koordinatenrichtung (100) einen Winkel von etwa 90° bilden.

11. Meßtaster nach einem der vorhergehenden Ansprüche, dadurch gekennzeichnet, daß die Detektionsvorrichtung (12, 82) als ein Bauteil in Dünnschichttechnologie aufgebaut ist.

12. Meßtaster nach einem der vorhergehenden Ansprüche, dadurch gekennzeichnet, daß die Detektionsvorrichtung (12, 82) und wenigstens Teile der signalverarbeitenden Anordnung (36, 118, 227) als ein Bauteil in Dünnschichttechnologie aufgebaut sind.

13. Meßtaster nach einem der vorhergehenden Ansprüche, dadurch gekennzeichnet, daß die Detektionsvorrichtung (12, 82) und wenigstens Teile der signalverarbeitenden Anordnung (36, 118, 227) in Hybridtechnik realisiert sind, mit einem Trägersubstrat, auf dem die Sensoren in Dünnschichttechnik und die elektronische Anordnung (36, 118, 227) in Dickschichttechnik und/oder mit oberflächenmontierbaren Bauelementen realisiert sind.

## Claims

1. Probe for coordinate measuring machines, manipulators or the like, having the following features:
   - the touch element (204) of the probe (205) is arranged displaceably in three dimensions in a frame (220),
   - the touch element (204) cooperates with at least one position measuring device (223), which senses the position of the touch element (204) relative to the frame (220) in a contactless fashion,
   - the position measuring device (223) contains at least one permanent magnet (224, 10, 80),
   - a detection device (226, 12, 82) is assigned to the permanent magnet (224, 10, 80),
   - the detection device (226, 12, 82) contains at least four magnetoresistive sensors (16, 18, 20, 22 and 60, 62, 64, 66 and 90, 92, 94, 96 and 130 to 137), arranged in the X-direction and Y-direction in a surface (11, 86) defined by an X-Y coordinate system (24, 26, 98, 100),
   - the sensors (16, 18, 20, 22 and 60, 62, 64, 66 and 90, 92, 94, 96 and 130 to 137) transmit signals to a signal-processing signal arrangement (227, 36, 118).

2. Probe according to Claim 1, characterised in that at least one temperature sensor (32, 114) is assigned to the detection device (226, 12, 82).

3. Probe according to Claim 1 or 2, characterised in that in each case four sensors (16, 18, 20, 22) are arranged at the corner points of at least one, preferably four or more quadrilaterals (46) lying in the surface (11).

4. Probe according to Claim 1 or 2, characterised in that in each case four sensors (60, 62, 64, 66) are arranged in the central region of the peripheral lines (78 to 81) of at least one, preferably four or more quadrilaterals (68) lying in the surface (11).

5. Probe according to one of the preceding Claims 3 or 4, characterised in that the direction of the polarising fields (48, 50, 52, 54, 71 to 74) is that of the magnetoresistive sensors (16, 18, 20, 22, 60, 62, 64, 66) parallel to the directions of the peripheral lines (55 to 58, 75 to 78) of the quadrilaterals (46, 68).

6. Probe according to Claim 1 or 2, characterised in that at least two sensors (130 to 137) are arranged on each of the four peripheral lines (138 to 141) of at least one quadrilateral (143, 153, 154, 155) lying in the surface (86).

7. Probe according to Claim 6, characterised in that the directions of the polarising fields (145 to 152) of the magnetoresistive sensors (130 to 137) arranged on the peripheral lines (138 to 141) of the quadrilaterals (142, 153, 154, 155) form an angle of approximately 90° with the peripheral lines (138 to 141).

8. Probe according to one of Claims 3 to 7, characterised in that the quadrilaterals (46, 68, 143, 153, 154, 155) are constructed as squares.

9. Probe according to Claim 1 or 2, characterised in that at least one row of sensors (120, 121), which contains at least three sensors (90, 92, 94, 96), is parallel to the two X-Y coordinate directions (98, 100) of the coordinate system defining the surface (86).

10. Probe according to Claim 9, characterised in that the directions of the polarising fields (123, 124) of the sensors (90, 92) of the first row of sensors (120), which is parallel to the X-coordinate direction (98), form an angle of approximately 90° with the X-coordinate direction (98), and in that the directions of the polarising fields (125, 126) of the sensors (94, 96) of the second row of sensors (121), which is parallel to the Y-coordinate direction (100), form an angle of approximately 90° with the Y-coordinate direction (100).

11. Probe according to one of the preceding claims, characterised in that the detection device (12, 82) is constructed as one component using thin-film technology.

12. Probe according to one of the preceding claims, characterised in that the detection device (12, 82) and at least parts of the signal-processing arrangement (36, 118, 227) are constructed as one component using thin-film technology.

13. Probe according to one of the preceding claims, characterised in that the detection device (12, 82) and at least parts of the signal-processing arrangement (36, 118, 227) are implemented using hybrid technology, with a carrier substrate on which the sensors are implemented using thin-film technology and the electronic arrangement (36, 118, 227) is implemented using thick-film technology and/or surface-mountable components.

**Revendications**

1. Palpeur de mesure pour machines de mesure en coordonnées, appareils de manipulation ou analogues avec les caractéristiques suivantes :
   - l'élément de palpage (204) du palpeur de mesure (205) est disposé dans un châssis (220) pouvant se déplacer en trois dimensions.
   - l'élément de palpage (204) coopère avec au moins un dispositif de mesure de position (223), qui enregistre la position de l'élément de palpage (204) par rapport au châssis (220) sans contact.
   - le dispositif de mesure de position (223) contient au moins un aimant permanent (224, 10, 80).
   - un dispositif de détection (226, 12, 82) est associé à l'aimant permanent (224, 10, 80).
   - le dispositif de détection (226, 12, 82) contient au moins quatre capteurs magnétorésitifs (16, 18, 20, 22 ou 60, 62, 64, 66 ou 130 à 137)disposés selon les directions X et Y dans une surface (11, 86) déterminée par un système de coordonnées en X, Y (24, 26, 98, 100).
   - les capteurs (16, 18,20, 22 ou 60, 62, 64, 66 ou 90, 92, 94, 96 ou 130 à 137) délivrent des signaux à un dispositif de traitement de signaux (227, 36, 118).

2. Palpeur de mesure selon la revendication 1, caractérisé en ce qu'au dispositif de détection (226, 12, 82) est associé au moins un capteur de température (32, 114).

3. Palpeur de mesure selon la revendication 1 ou 2, caractérisé en ce que chacun des quatre capteurs (16, 18, 20, 22) est disposé dans l'un des angles d'au moins un quadrilatère (46) se trouvant de préférence plus ou moins sur la surface (11).

4. Palpeur de mesure selon la revendication 1 ou 2, caractérisé en ce que chacun des quatre capteurs (60, 62, 64, 66) est disposé dans la zone médiane des lignes de contour (78 à 81) d'au moins un quadrilatère (68) se trouvant de préférence plus ou moins sur la surface (11).

5. Palpeur de mesure selon l'une des revendications précédentes 3 ou 4, caractérisé en ce que la direction des champs de prémagnétisation (48, 50, 52, 54, 71 à 74) des capteurs magnétorisistifs (16, 18, 20, 22, 60, 62, 64, 66) est parallèle aux directions des lignes de contour (55 à 58, 75 à 78) du quadrilatère (46, 68).

6. Palpeur de mesure selon la revendication 1 ou 2, caractérisé en ce qu'au moins deux capteurs (130 à 137) sont disposés sur chacune des quatre lignes de contour (138 à 141) d'au moins un quadrilatère (143, 153, 154, 155) se trouvant sur la surface (86).

7. Palpeur de mesure selon la revendication 6, caractérisé en ce que les directions des champs de prémagnétisation (145 à 152) des capteurs (130 à 137) magnétorésistifs disposés sur les lignes de contour (138 à 141) du quadrilatère (142, 153, 154, 155) forment avec les lignes de contour (138 à 141) un angle d'environ 90°.

8. Palpeur de mesure selon l'une des revendications 3 à 7, caractérisé en ce que les quadrilatères (46, 68, 143, 153, 154, 155).

9. Palpeur de mesure selon la revendication 1 ou 2, caractérisé en ce qu'au moins une série de capteurs (120, 121), qui contient au moins trois capteurs (90, 92, 94, 96) est parallèle aux deux directions de coordonnées en X, Y (98, 100) du système de coordonnées définissant la surface (86).

10. Palpeur de mesure selon la revendication 9, caractérisé en ce que les directions des champs de prémagnétisation (123, 124) des capteurs (90, 92) de la première série (120) de capteurs se trouvant parallèle à la direction des coordonnées en X (98) forment un angle d'environ 90° et en ce que les directions des champs de prémagnétisation (125, 126) des capteurs (94, 96) de la deuxième série (121) se trouvant parallèle à la direction des coordonnées en Y (100) forment un angle d'environ 90°.

11. Palpeur de mesure selon l'une des revendications précédentes, caractérisé en ce que le dispositif de détection (12, 82) est construit comme un composant selon la technologie des couches minces.

12. Palpeur de mesure selon l'une des revendications précédentes, caractérisé en ce que le dispositif de détection (12, 82) et au moins des éléments du dispositif (36, 118, 227) de traitement de signaux sont construits comme un composant selon la technologie des couches minces.

13. Palpeur de mesure selon l'une des revendications précédentes, caractérisé en ce que le dispositif de détection (12, 82) et au moins des éléments du dispositif de traitement de signaux (36, 118, 227) sont réalisés selon la technique des composants hybrides, avec un substrat de support, sur lequel les capteurs sont réalisés selon la technique des couches minces et le dispositif électronique (36, 118, 227) est réalisé selon la technique des couches épaisses et/ou sont réalisés comme des éléments constitutifs pourront être montés en surface.

FIG.1

FIG. 2

FIG. 3

FIG. 4

FIG. 5